# FASCICULE DE BREVET EUROPEEN

(11) **EP 4 232 950 B1**
(45) Date de publication et mention de la délivrance du brevet: **19.02.2025**
(21) Numéro de dépôt: 21805573.9
(22) Date de dépôt: 15.10.2021
(51) Int. Cl.: G06K 19/077, H01Q 1/36, H01Q 1/22, C08L 9/00, C08L 7/00, C08K 3/04, C08K 3/34, H01B 3/28, B60C 1/00, B60C 19/00, C08K 3/36, C08K 3/06, C08K 3/22

(54) **MODULE DE COMMUNICATION RADIOFRÉQUENCE COMPRENANT UN DISPOSITIF ÉLECTRONIQUE ENROBÉ DANS UN MATÉRIAU ÉLASTOMÉRIQUE**
RADIO-FREQUENZ KOMMUNIKATIONSMODUL MIT EINER ELEKTRONISCHEN EINHEIT UMHÜLLT MIT EINEM ELASTOMEREN MATERIAL
RADIO-FREQUENCY COMMUNICATION MODULE COMPRISING AN ELECTRONIC DEVICE ENVELOPED IN AN ELASTOMERIC MATERIAL

(30) Priorité: 23.10.2020 FR 2010874
(43) Date de publication de la demande: 30.08.2023
(73) Titulaire: COMPAGNIE GENERALE DES ETABLISSEMENTS MICHELIN, 63000 Clermont-Ferrand (FR)
(72) Inventeur: PORTIER, Guillaume, 63040 CLERMONT-FERRAND Cedex 9 (FR); CADALEN, Alice, 63040 CLERMONT-FERRAND Cedex 9 (FR); COUTURIER, Laurent, 63040 CLERMONT-FERRAND Cedex 9 (FR); TOURENNE, Annabel, 63040 CLERMONT-FERRAND Cedex 9 (FR)
(74) Mandataire: M.F.P. Michelin
(86) Numéro de dépôt international: PCT/FR2021/051798
(87) Numéro de publication internationale: WO 2022/084608

(56) Documents cités:
- EP-A1- 1 028 007
- EP-A1- 3 711 974
- WO-A1-2018/104622
- WO-A1-2019/170998

## Description

### Domaine technique de l'invention

La présente invention est relative à un module de communication radiofréquence, ou produit fini apte à être inséré dans la structure d'un article de caoutchouc, en particulier un bandage pneumatique, comportant un transpondeur radiofréquence noyé dans un matériau élastomérique.

### Art antérieur

Il est courant d'intégrer dans un bandage pneumatique un dispositif électronique comprenant par exemple un transpondeur à identification par radiofréquence passif. Ce type de transpondeur est généralement désigné par le sigle anglais RFID. Un tel dispositif électronique peut stocker des données, par exemple relatives au pneumatique.

Pour améliorer la qualité de la transmission des données stockées dans le dispositif électronique, celui-ci est préalablement enrobé dans un matériau élastomérique. Les propriétés diélectriques ont une influence directe sur la transmission du signal entre le dispositif électronique et le système de lecture et l'on recherche un matériau permettant d'obtenir un bon compromis entre la permittivité du dit matériau et les caractéristiques du dispositif électronique, tels que par exemple l'impédance de la puce RFID ou la longueur d'antenne.

De nombreux travaux ont été conduits pour proposer des formulations de matériaux élastomériques adaptées à l'encapsulation de dispositifs électroniques. Le document US 2009/0015415 enseigne une composition comprenant du caoutchouc naturel, de 5 à 55 pce de silice et moins de 30 pce de noir de carbone. Le document WO 2016/105929 enseigne une composition comprenant du caoutchouc naturel et au moins 35 pce d'un noir grossier, dont la surface spécifique est inférieure à 30 m²/g.

Les documents WO 2016/105937, WO 2016/105938 et WO 2017/083251 enseignent l'ajout d'une charge autre que du noir de carbone ou de la silice, à savoir des particules de caoutchouc réticulé, une charge non renforçante ou un matériau inorganique de taille nanométrique, afin d'améliorer la permittivité des compositions.

Les documents EP 3711974 , WO 2018/104622 , WO 2019/170998 et EP 1028007 font également partie de l'état de l'art. Le dispositif électronique peut être enrobé dans un matériau élastomérique afin de former un ensemble constituant un module de communication radiofréquence et stocké avant son incorporation dans un bandage pneumatique, ou tout autre article élastomérique. Ceci permet de le protéger et de faciliter son incorporation.

Ces modules sont souvent de petites dimensions, de l'ordre de quelques dizaines de millimètres. Or à ces échelles, on peut observer des difficultés pour assurer la stabilité géométrique des bandes de matériau élastomérique destinées à enrober le dispositif électronique, et notamment un effet de retrait après extrusion des bandes.

Il est donc important de formuler une composition telle que le module de communication radiofréquence obtenu présente une bonne stabilité géométrique jusqu'à son incorporation dans un article de caoutchouc, le module devant avoir, une fois l'article cuit ou réticulé, une rigidité similaire aux compositions adjacentes de manière à ne pas perturber les performances de l'article de caoutchouc, tout en assurant un bon fonctionnement du dispositif avec une faible constante diélectrique.

Poursuivant ses recherches, la demanderesse a découvert qu'un module de communication radiofréquence comprenant un matériau élastomérique spécifique présentait une excellente stabilité géométrique, notamment lors de la fabrication des éléments de matériau élastomérique destinés à enrober le dispositif, tout en conciliant les propriétés parfois contradictoires de rigidité similaire aux compositions adjacentes et de permittivité faible du matériau élastomérique.

### Description détaillée de l'invention

L'invention, décrite plus en détails ci-après, a pour objet un module de communication radiofréquence (2) comprenant un dispositif électronique (1) enrobé dans matériau élastomérique (3a, 3b), le matériau élastomérique comprenant :
- de 40 à 55 pce d'un élastomère butadiènique choisi parmi les polybutadiènes, et de 45 à 60 pce d'un élastomère isoprénique choisi parmi le caoutchouc naturel et les polyisoprènes de synthèse, et ne comprend pas d'autre élastomère ;
- de 6 à 20 pce de noir de carbone présentant une surface spécifique BET allant de 70 à 99 m²/g ;
- de 25 à 35 pce de charge inorganique.

### Définitions

Les composés comprenant du carbone, mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### Matériau élastomérique

Le dispositif électronique du module de communication radiofréquence selon l'invention est enrobé dans un matériau élastomérique.

### Élastomère

Le matériau élastomérique dans lequel est noyé le dispositif électronique est à base de 10 à 60 pce d'au moins un élastomère butadiénique. Ainsi, le matériau élastomérique peut contenir un ou plusieurs élastomères butadiéniques ou un mélange d'un ou plusieurs élastomères butadiéniques avec un ou plusieurs autres élastomères, par exemple diéniques autres que butadièniques.

L'élastomère butadiénique du matériau élastomérique est préférentiellement choisi dans le groupe constitué par les polybutadiènes (en abrégé "BR"), les copolymères de butadiène et leurs mélanges. De tels copolymères de butadiène sont plus préférentiellement choisis dans le groupe constitué par les copolymères de butadiène-styrène (SBR) et leurs mélanges. De manière préférée, l'élastomère butadiénique est choisi dans le groupe constitué par les polybutadiènes et leurs mélanges. De préférence, l'élastomère butadiènique est non syndiotactique.

Le matériau élastomérique comprend également, de manière préférée, un élastomère isoprénique.

Par "élastomère isoprénique", on entend un homopolymère ou un copolymère d'isoprène, en d'autres termes un élastomère diénique choisi dans le groupe constitué par le caoutchouc naturel (NR) qui peut être plastifié ou peptisé, les polyisoprènes de synthèse (IR), les différents copolymères d'isoprène, en particulier les copolymères d'isoprène-styrène (SIR), d'isoprène-butadiène (BIR) ou d'isoprène-butadiène-styrène (SBIR), et les mélanges de ces élastomères.

De manière préférée, l'élastomère isoprénique est choisi dans le groupe constitué par les polyisoprènes de synthèse, le caoutchouc naturel, les copolymères d'isoprène et leurs mélanges, de préférence dans le groupe constitué par le caoutchouc naturel, les polyisoprènes comprenant un taux massique de liaisons cis 1,4 d'au moins 90%, plus préférentiellement d'au moins 98% par rapport à la masse d'élastomère isoprénique et leurs mélanges. De manière préférée, l'élastomère isoprénique est le caoutchouc naturel.

Le matériau élastomérique comprend de 40 à 55 pce d'un élastomère butadiènique choisi parmi les polybutadiènes, et de 45 à 60 pce d'un élastomère isoprénique choisi parmi le caoutchouc naturel et les polyisoprènes de synthèse, et ne comprend pas d'autre élastomère.

Le matériau élastomérique isolant électriquement comporte de manière préférée un promoteur d'adhésion pour le lier au dispositif électronique. Ce promoteur peut être un sel de cobalt ou de nickel, par exemple du naphtenate de cobalt à un taux inférieur à 3 pce et avec un taux de soufre adapté, de l'ordre de 5 à 7 pce. Le matériau élastomérique isolant électriquement présente de manière préférée une constante diélectrique mesurée entre 800 MHz et 1 GHz inférieure à 6,5.

Le matériau élastomérique comprend préférentiellement un système de vulcanisation comprenant du soufre et un accélérateur de vulcanisation.

### Charge

Le matériau élastomérique dans lequel est noyé le dispositif électronique comprend au moins de 6 à 20 pce de noir de carbone présentant une surface spécifique BET allant de 70 à 99 m²/g et de 20 à 40 pce de charge inorganique.

Comme noirs de carbone conviennent les noirs de carbone conventionnellement utilisés dans les pneumatiques (noirs dits de grade pneumatique). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à un élastomère isoprénique sous la forme d'un masterbatch (voir par exemple demandes WO 97/36724 ou WO 99/16600).

On caractérise les noirs de carbone par différentes propriétés, notamment par la surface spécifique BET, et par l'indice d'absorption d'huile d'échantillons comprimés (COAN pour « Compressed Oil Absorption Number » en anglais). Le COAN des noirs de carbone, est mesuré selon la norme ASTM D3493-16.

La surface spécifique BET des noirs de carbone est mesurée selon la norme D6556-10 (méthode multipoints (au minimum 5 points) - gaz: azote - domaine de pression relative P/P0 : 0.1 à 0.3).

Des exemples de noirs de carbone utiles aux besoins de l'invention sont les Noirs de la série 300 tels que le N330, le N347.

Le taux de noir de carbone dans le matériau élastomérique est préférentiellement compris dans un domaine de valeurs allant de 8 à 15 pce.

Le matériau élastomérique ne comprend de préférence pas de noir de carbone dont la surface BET est inférieure à 70 m²/g ou en comprend moins de 10 pce, de préférence moins de 5 pce, de manière préférée moins de 2 pce, préférentiellement moins de 1 pce.

Le matériau élastomérique ne comprend de préférence pas de noir de carbone dont la surface BET est supérieure à 99 m²/g ou en comprend moins de 10 pce, de préférence moins de 5 pce, de manière préférée moins de 2 pce, préférentiellement moins de 1 pce.

Le matériau élastomérique comprend également de 25 à 35 pce, de charge inorganique.

L'état physique sous lequel se présente la charge inorganique est indifférent, que ce soit sous forme de poudre, de microperles, de granulés, de billes ou toute autre forme densifiée appropriée.

La charge inorganique est de manière préférée choisie dans le groupe constitué par les charges minérales du type siliceuse, en particulier de la silice (SiO2), du type alumineuse, en particulier de l'alumine (Al2O3), la craie, l'argile, la bentonite, le talc, le kaolin, les microbilles de verre, les paillettes de verre (« glass flakes » en anglais) et leurs mélanges, de manière préférée parmi la silice, la craie, l'argile, la bentonite, le talc, le kaolin et leurs mélanges, préférentiellement parmi la silice, la craie, le kaolin et leurs mélanges. De manière très préférée, la charge inorganique est de la silice.

La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g. À titre de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

Dans le présent exposé, la surface spécifique BET de la silice est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17].

La surface spécifique CTAB de la silice est déterminée selon la norme française NF T 45-007 de novembre 1987 (méthode B).

Dans le cas préféré où la charge inorganique comprend de la silice, celle-ci a de préférence une surface BET comprise entre 45 et 400 m2/g, plus préférentiellement comprise entre 60 et 300 m2/g.

Pour coupler la charge inorganique renforçante à l'élastomère, on peut de manière optionnelle utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes, ou des polyorganosiloxanes bifonctionnels.

On peut utiliser notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

A titre d'exemples de silanes polysulfurés, on citera plus particulièrement les polysulfures (notamment disulfures, trisulfures ou tétrasulfures) de bis-(alkoxyl(C1-C4)-alkyl(C1-C4)silyl-alkyl(C1-C4)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C1-C4)-dialkyl(C1-C4)silylpropyl), plus particulièrement le tétrasulfure de bis-monoéthoxydiméthylsilylpropyl tel que décrit dans la demande de brevet US 2004/132880.

A titre d'agent de couplage autre qu'alkoxysilane polysulfuré, on citera notamment des POS (polyorganosiloxanes) bifonctionnels ou encore des polysulfures d'hydroxysilane tels que décrits dans les demandes de brevet WO 02/30939 et WO 02/31041, ou encore des silanes ou POS porteurs de groupements fonctionnels azo-dicarbonyle, tels que décrits par exemple dans les demandes de brevet WO 2006/125532, WO 2006/125533, WO 2006/125534.

Dans les matériaux élastomériques conformes à l'invention, la teneur en agent de couplage est préférentiellement comprise entre 4 et 12 pce, plus préférentiellement entre 4 et 8 pce. Dans un autre arrangement, les matériaux élastomériques conformes à l'invention ne comprennent pas d'agent de couplage.

### Système de réticulation

Le matériau élastomérique comprend préférentiellement un système de vulcanisation comprenant du soufre et un accélérateur de vulcanisation.

Le système de réticulation étant à base de soufre, on parle d'un système de vulcanisation. Le soufre peut être apporté sous toute forme, notamment sous forme de soufre moléculaire, ou d'un agent donneur de soufre. Au moins un accélérateur de vulcanisation est également présent, et, de manière optionnelle, on peut également utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 0,1 et 10 pce, de préférence entre 1 et 5 pce. L'accélérateur de vulcanisation est utilisé à un taux préférentiel compris dans un domaine allant de 1 à 10 pce, de préférence allant de 1 à 5 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

### Additifs divers

Le matériau élastomérique peut également comprendre tout ou partie des additifs usuels habituellement utilisés dans les compositions d'élastomères destinées à la fabrication d'articles de caoutchouc, en particulier de bandages pneumatiques, comme par exemple des plastifiants ou des huiles d'extension, que ces derniers soient de nature aromatique ou non-aromatique, des pigments, des agents de protection tels que cires anti-ozone, anti-ozonants chimiques, antioxydants, des agents anti-fatigue, des résines renforçantes telles que des bismaleimides, des accepteurs (par exemple résine phénolique novolaque) ou des donneurs de méthylène (par exemple HMT ou H3M).

Le matériau élastomérique peut également comprendre un promoteur d'adhésion tel qu'un sel de cobalt, destiné à améliorer l'adhésion entre la surface métallique du dispositif électronique et le matériau élastomérique. Lorsqu'il comprend du sel de cobalt, le matériau élastomérique comprend de manière préférée au plus 5 pce de sel de cobalt.

Le matériau élastomérique de l'invention peut également comprendre un sel de métal alcalino-terreux, alcalin ou lanthanide.

Le sel d'un métal alcalino-terreux, alcalin ou lanthanide peut avantageusement être un acétylacétonate d'un métal alcalino-terreux, alcalin ou lanthanide.

De préférence, le métal alcalino-terreux, alcalin ou lanthanide du sel est choisi dans le groupe constitué par le lithium, le sodium, le potassium, le calcium, le magnésium, le lanthane, le cérium, le praséodyme, le néodyme, le samarium, l'erbium et leurs mélanges. De préférence encore, le sel d'un métal alcalino-terreux, alcalin ou lanthanide est un sel de magnésium ou de néodyme. En d'autres termes, le sel d'un métal alcalino-terreux, alcalin ou lanthanide est avantageusement un acétylacétonate de magnésium ou de néodyme, de préférence un acétylacétonate de magnésium.

Le taux du sel de métal alcalino-terreux, alcalin ou lanthanide peut être compris par exemple dans un domaine allant de 0,1 à 5 pce, de préférence de 0,5 à 4 pce et plus préférentiellement de 0,5 à 2 pce.

Le matériau élastomérique de l'invention peut en outre comprendre un sel de cobalt. Par exemple le sel de cobalt peut être choisi dans le groupe constitué par les abiétates, les acétylacétonates, les tallates, les naphténates, les résinâtes et leurs mélanges. Le taux de sel de cobalt peut avantageusement être compris dans un domaine allant de 0,5 à 3 pce, préférentiellement de 0,5 à 2 pce, de préférence de 0,5 à 1,2 pce.

### Dispositif électronique

Le module de communication radiofréquence selon l'invention peut comprendre tout type de dispositif électronique. En particulier, le dispositif électronique est de manière préférée un transpondeur à identification par radiofréquence passif, souvent identifié par l'acronyme anglais RFID (Radio-Frequency IDentification) et désigné par la suite sous le terme « transpondeur radiofréquence ».

On entend ici par le terme « transpondeur radiofréquence » que l'interrogation du transpondeur radiofréquence se fait extérieurement à celui-ci et de façon passive. Les phases d'interrogation ne nécessitent alors aucune énergie propre au transpondeur radiofréquence. La fonctionnalité du transpondeur radiofréquence est principalement un rôle d'identification de l'article en caoutchouc auquel il est intégré, par exemple une enveloppe pneumatique.

Les transpondeurs radiofréquences comprennent usuellement une puce électronique et une antenne rayonnante apte à communiquer avec un lecteur radiofréquence.

En particulier la fréquence de communication du transpondeur radiofréquence est située dans la bande des UHF (acronyme de Ultra Hautes Fréquences) comprise entre 300 MHz et 3 GHz permettant d'avoir un compromis avantageux entre une petite taille de l'antenne rayonnante, facilement intégrable dans un matériau élastomérique destiné à un bandage pneumatique ou un article de caoutchouc, et une grande distance de lecture du transpondeur radiofréquence, loin du bandage pneumatique ou de l'article de caoutchouc. De façon avantageuse, le transpondeur radiofréquence communique dans la bande étroite de fréquences comprise entre 860 MHz et 960 Mhz et plus spécifiquement sur des bandes très étroites de 860 MHz à 870 MHz et 915 MHz à 925 MHz. En effet, à ces fréquences, les mélanges élastomères classiques d'un bandage pneumatique ont une influence importante sur la propagation des ondes radioélectriques. De plus, ces fréquences - définies par les normes - imposent de diminuer la longueur de l'antenne rayonnante, ceci ayant l'avantage de faciliter l'intégration du transpondeur radiofréquence, noyé dans un patch caoutchouteux, dans le bandage pneumatique. Le module de communication radiofréquence répond par ailleurs aux normes ISO 29160, 20912 et 18000-63.

Selon un premier mode de réalisation, l'antenne rayonnante comporte deux tronçons d'antennes hélicoïdales et la puce électronique est connectée galvaniquement aux deux tronçons d'antennes hélicoïdales.

Selon un autre mode de réalisation, le transpondeur radiofréquence comprend en plus une antenne primaire connectée électriquement à la puce électronique, dans lequel l'antenne primaire est couplée inductivement à l'antenne rayonnante, et dans lequel l'antenne rayonnante est une antenne dipôle constituée d'un ressort hélicoïdal monobrin.

Ce deuxième mode de réalisation a l'avantage de dissocier mécaniquement l'antenne rayonnante des composants électroniques du transpondeur et ainsi de supprimer le point faible des transpondeurs usuels à savoir la zone de fixation des tronçons d'antenne sur le support de la puce électronique.

### Procédé d'enrobage d'un dispositif électronique

Le module de communication radiofréquence peut être fabriqué par un procédé qui comprend les étapes suivantes :
- Réaliser deux couches de matériau élastomérique tel que décrit dans la présente,
- Prendre le dispositif électronique en sandwich dans les deux couches en le déposant entre les deux couches,
- Le cas échéant cuire le module.

Alternativement, le module peut être fabriqué en déposant le dispositif électronique sur une portion d'une couche, la couche est alors repliée sur elle-même pour couvrir le dispositif électronique qui est ainsi pris en sandwich sur toute sa longueur ou une partie de sa longueur.

La réalisation des couches peut se faire par calandrage. Au cours de la cuisson du module, le matériau élastomérique est réticulé.

Le module de communication selon l'invention, par ses propriétés, peut être intégré à tout type d'article de caoutchouc, tels que par exemples ballons, bandes transporteuses, articles gonflables. En particulier, le module de communication selon l'invention est particulièrement adapté pour être intégré dans la structure d'un bandage pneumatique.

### Bandage pneumatique

L'invention a également pour objet un bandage pneumatique comportant un sommet, deux bourrelets et deux flancs, une nappe carcasse ancrée dans les dits deux bourrelets, comprenant un module de communication radiofréquence selon l'invention.

Selon un mode de réalisation préférentiel, l'axe de l'antenne rayonnante du module de communication radiofréquence est orientée de telle sorte que les éléments métalliques présents à proximité n'interfèrent pas avec le plan de propagation de l'onde électromagnétique, allée ou retour sur le transpondeur. Dans le cadre d'une nappe métallique, l'angle entre l'axe de l'antenne rayonnante et l'axe des câbles doit être compris entre 70° et 130°.

Ainsi, dans un mode de réalisation préférentielle, un pneumatique comprend une nappe métallique comprenant des renforts métalliques substantiellement parallèles entre eux, noyés dans une composition de caoutchouc, dans lequel le module de communication radiofréquence comprend une antenne rayonnante, l'angle entre l'axe de l'antenne rayonnante et l'axe des renforts métalliques étant compris entre 70° et 130°.

Selon un mode de réalisation, le module de communication radiofréquence peut être fixé sur un flanc du pneumatique. On évite alors de le placer à proximité immédiate du cordon de centrage ou milieu du flanc du pneumatique, mais plutôt au-dessus ou en-dessous de ce cordon de centrage.

Selon un autre mode de réalisation, le module de communication radiofréquence peut être fixé à la surface de la couche intérieure du pneumatique.

Selon encore un autre mode de réalisation, le module de communication radiofréquence est intégré dans le pneumatique lors de la confection de ce dernier.

La mise en place d'un tel module de communication radiofréquence peut intervenir à tout moment de la vie du pneumatique de sa fabrication à son rechapage.

Le pneumatique équipé d'un module de communication radiofréquence peut être un pneumatique destiné à équiper des véhicules à moteur de type tourisme, SUV ("Sport Utility Vehicles"), deux roues (notamment motos), avions, comme des véhicules industriels choisis parmi camionnettes, « Poids-lourd », c'est-à-dire métro, bus, engins de transport routier (camions, tracteurs, remorques), véhicules hors-la-route tels qu'engins agricoles ou de génie civil, et autres véhicules de transport ou de manutention.

### Description des figures

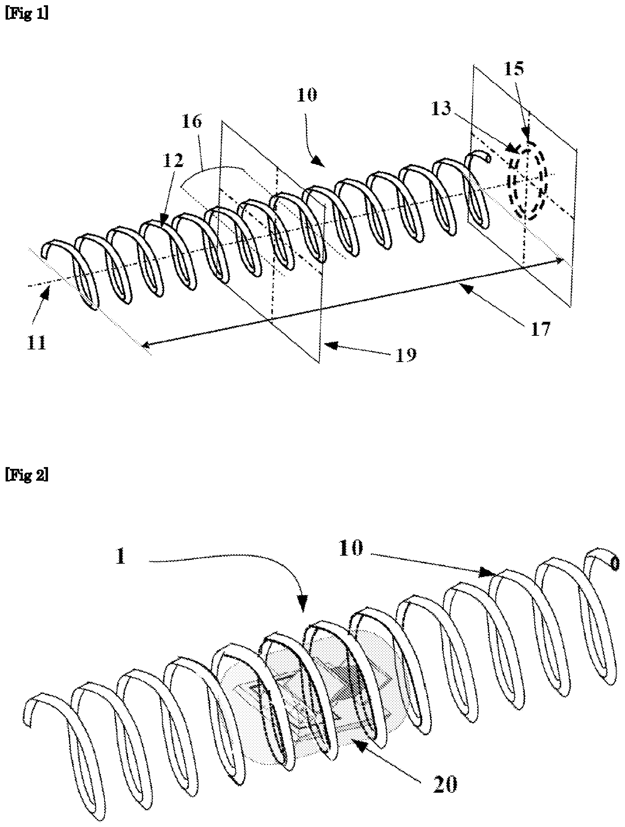

[Fig 1] La figure 1 présente une antenne rayonnante 10 constituée d'un fil en acier 12 qui a été déformé plastiquement afin de former un ressort hélicoïdal présentant un axe de révolution 11. Ce fil d'acier est revêtu d'une couche de conduction en cuivre, aluminium, argent, or, cuivre, étain, zinc ou laiton recouverte si nécessaire d'une couche d'isolation chimique par exemple en laiton, zinc, nickel ou étain pour protéger le matériau élastomérique du matériau de la couche de conduction.

La conduction électromagnétique d'une telle antenne s'effectue principalement par un effet de peau, c'est-à-dire qu'elle est principalement assurée dans les couches extérieures de l'antenne. Cette épaisseur de peau est notamment fonction de la fréquence de rayonnement et de la conductivité du matériau constitutif de la couche de conduction. À titre d'exemple, pour une fréquence UHF (par exemple 915 MHz), l'épaisseur de peau est de l'ordre de 2,1 µm pour l'argent, 2,2 µm pour le cuivre, 4,4 µm pour le laiton.

Le fil d'acier peut être revêtu de ces couches puis mis en forme ; alternativement il peut aussi être mis en forme puis revêtu.

Le ressort hélicoïdal est défini tout d'abord par un diamètre d'enroulement du fil revêtu et un pas d'hélice. Ainsi, on détermine précisément des diamètres intérieur 13 et extérieur 15 du ressort hélicoïdal en prenant en compte le diamètre du fil. La longueur du ressort 17 correspond ici à la demi-longueur d'onde du signal de transmission du transpondeur radiofréquence 1 dans une masse caoutchouteuse. Ainsi on peut définir un plan médian 19 au ressort hélicoïdal perpendiculaire à l'axe de révolution 11 séparant l'antenne rayonnante en deux parties égales. Ce plan est au milieu de la zone centrale 16 de l'antenne rayonnante, cette zone centrale 16 correspond environ à 25 % de la longueur totale de l'antenne et de préférence 15 %.

[Fig 2] La figure 2 présente un transpondeur radiofréquence 1 dans une configuration où la partie électronique 20 est située à l'intérieur d'une antenne rayonnante 10. La forme géométrique de la partie électronique 10 est circonscrite dans un cylindre dont le diamètre est inférieur ou égal au diamètre intérieur 13 du ressort hélicoïdal. L'enfilement de la partie électronique 20 dans l'antenne rayonnante 10 s'en trouve facilité.

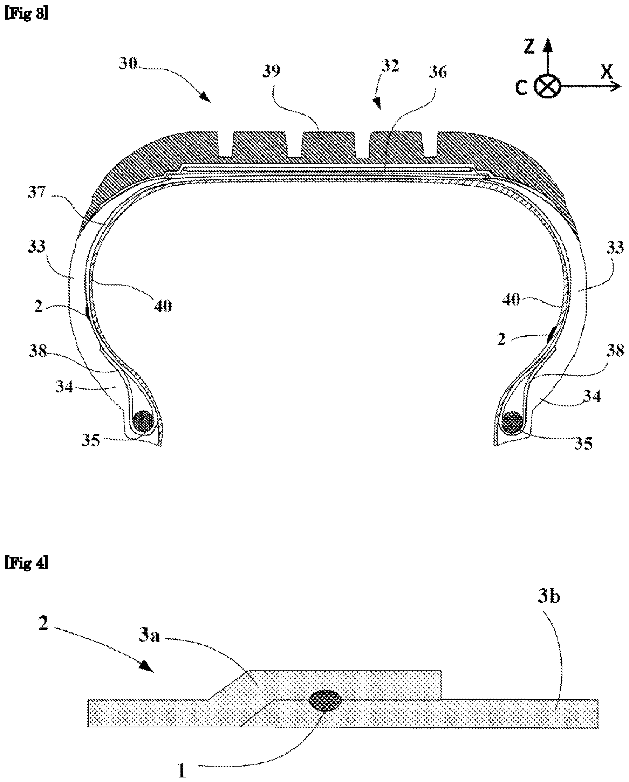

[Fig 3] La figure 3 présente en coupe axiale un pneumatique comportant dans sa structure un module de communication radiofréquence placé selon les deux modes précédemment décrits.

La figure 3 indique les directions axiale X, circonférentielle C et radiale Z.

Ce pneumatique 30 comporte un sommet 32 renforcé par une armature de sommet ou ceinture 36, deux flancs 33 et deux bourrelets 34, chacun de ces bourrelets 34 étant renforcé avec une tringle 35. L'armature de sommet 36 est surmontée radialement extérieurement d'une bande de roulement caoutchouteuse 39. Une armature de carcasse 37 est enroulée autour des deux tringles 35 dans chaque bourrelet 34, le retournement 38 de cette armature 37 étant par exemple disposé vers l'extérieur du pneumatique 30. L'armature de carcasse 37 est de manière connue en soi constituée d'au moins une nappe renforcée par des câbles dits « radiaux », par exemple ici textiles, c'est-à-dire que ces câbles sont disposés pratiquement parallèles les uns aux autres et s'étendent d'un bourrelet à l'autre de manière à former un angle compris entre 80° et 90° avec le plan circonférentiel médian (ainsi que le plan médian (plan perpendiculaire à l'axe de rotation du pneumatique qui est situé à mi-distance des deux bourrelets 4 et passe par le milieu de l'armature de sommet 36). Une couche de gomme intérieure étanche 40 (en anglais « inner liner ») s'étend d'un bourrelet à l'autre radialement intérieurement relativement à l'armature de carcasse 37.

Ce pneumatique 30 comporte à titre d'illustration un module de communication 2 placé à l'interface entre le mélange caoutchouteux constituant le flanc 33 et la nappe carcasse 37. La position illustrée est radialement extérieure à l'extrémité du retournement 38 de la nappe carcasse 37, sous le milieu du flanc 33. Cette position est excellente pour la communication radiofréquence entre le transpondeur et un lecteur extérieur et la très bonne robustesse du transpondeur radiofréquence du module de communication lui permet de supporter sans dommages les fortes sollicitations mécaniques liées au roulage.

Le pneumatique 30 comporte aussi un module de communication sous sa configuration prévulcanisé et fixé sur la gomme intérieure 40 du pneumatique au moyen d'une couche de gomme de liaison usuelle vulcanisant à froid, telle que Gray gum fournie par Tech International. Ce module de communication a été fixé après la fabrication du pneumatique, par exemple en préparation d'opérations de rechapage de la bande de roulement du pneumatique.

[Fig 4] La figure 4 représente un dispositif électronique (1) enrobé dans deux couches d'un matériau élastomérique (3a, 3b), l'ensemble constituant un module de communication radiofréquence (2).

### Exemples

### Préparation des compositions de caoutchouc

On procède pour les essais qui suivent de la manière suivante : on introduit dans un mélangeur interne (taux de remplissage final : environ 70% en volume), dont la température initiale de cuve est d'environ 60 °C, successivement, l'élastomère diénique (époxydé ou non), la charge renforçante ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 165°C.

On récupère le mélange ainsi obtenu, on le refroidit puis on incorpore du soufre et un accélérateur (sulfénamide), sur un mélangeur (homo-finisseur) à 30 °C, en mélangeant le tout (phase productive) pendant un temps approprié (par exemple entre 5 et 12 min).

Les compositions ainsi obtenues sont ensuite calandrées sous la forme de plaques (épaisseur de 2 à 3 mm) ou de feuilles fines de caoutchouc.

Un dispositif électronique est pris en sandwich entre deux couches de composition identique, comme illustré à la figure 4 de manière à obtenir un module de communication radiofréquence.

Ce module a une longueur comprise entre 3 et 8 cm et une largeur comprise entre 0.5 et 3 cm.

### Permittivité

On mesure la permittivité relative de chaque composition. Les résultats sont exprimés sur une base de 100, 100 correspondant à la composition qui présente la permittivité la plus défavorable pour une utilisation comme gomme d'enrobage d'un dispositif électronique, en l'espèce la composition C4. Plus la valeur est faible, plus la permittivité relative est favorable à l'utilisation de la gomme évaluée comme gomme d'enrobage d'un dispositif électronique.

### Retrait

Le retrait est évalué en mesurant la longueur L₀ du module obtenu immédiatement après calandrage de la composition de caoutchouc sous forme d'une plaque, et découpage de la plaque de caoutchouc aux dimensions désirées, puis en mesurant la longueur L₁ du module après un temps de stabilisation compris entre au minimum 1 h et au plus 48 h, la durée précise de stabilisation correspondant à la durée à partir de laquelle la longueur du module n'évolue plus. Le retrait est calculé selon (L₀-L₁)/L₀.

Une valeur de 100 est attribuée à la composition présentant le retrait le plus important. Une valeur inférieure à 100 correspond à un retrait plus faible.

On observe que la module de communication selon l'invention présente à la fois un retrait très faible et une permittivité particulièrement favorable à l'utilisation de la gomme comme gomme d'enrobage d'un dispositif électronique destiné à être intégré dans un article de caoutchouc.

**[Tableau]**

| | **C1** | **C2** | **C3** | **C4** |
|---|---|---|---|---|
| NR (1) | 50 | 100 | 50 | 50 |
| BR (2) | 50 | 0 | 50 | 50 |
| Noir N330 | 9 | 9 | 3 | 30 |
| Silice SIL165G (3) | 30 | 30 | 30 | 30 |
| Additifs (4) | 7,5 | 7,5 | 7,5 | 7,5 |
| Système de vulcanisation (5) | 4,5 | 4,5 | 4,5 | 4,5 |
| *Dont soufre insoluble* | 2 | 2 | 2 | 2 |

| **Résultats** | | | | |
|---|---|---|---|---|
| *Permittivité relative @915 MHz* | 40 | 40 | 20 | 100 |
| *Retrait* | 20 | 100 | 50 | 40 |

| | | | | |
|---|---|---|---|---|
| *(1) Caoutchouc naturel* *(2) Polybutadiène non fonctionnel « Buna CB24 » commercialisé par la société Lanxess* *(3) Silice « 165G » commercialisée par Solvay* *(4) Les additifs comprennent de l'oxyde de zinc (grade industriel, société Umicore), de l'acide stéarique (« Pristerene 4931 » de la société Uniqema), du N-1,3-diméthylbutyl-N-phénylparaphénylènediamine (« Santoflex 6-PPD » de la société Flexsys) et du polymère 2,2,4-Trimethyl-1,2-Dihydroquinoline (TMQ)* *(5) Le système de vulcanisation comprend le soufre insoluble, l'accélérateur (N,N-dicyclohexylbenzothiazole-2-sulfénamide de la société Flexsys) et le retardateur (N-cyclohexylthiophtalimide commercialisé sous dénomination « Vulkalent G » par la société Lanxess) de vulcanisation* | | | | |

## Revendications

1. Module de communication radiofréquence (2) comprenant un dispositif électronique (1) enrobé dans un matériau élastomérique (3a, 3b), le matériau élastomérique comprenant :
- de 40 à 55 pce d'un élastomère butadiènique choisi parmi les polybutadiènes, et de 45 à 60 pce d'un élastomère isoprénique choisi parmi le caoutchouc naturel et les polyisoprènes de synthèse, et ne comprend pas d'autre élastomère ;
- de 6 à 20 pce de noir de carbone présentant une surface spécifique BET allant de 70 à 99 m²/g ;
- de 25 à 35 pce de charge inorganique.

2. Module de communication radiofréquence selon la revendication précédente comprenant de 8 à 15 pce de noir de carbone présentant une surface spécifique BET allant de 70 à 99 m²/g.

3. Module de communication radiofréquence selon l'une quelconque des revendications précédentes dans lequel la charge inorganique est choisie dans le groupe constitué par les charges minérales du type siliceux, en particulier de la silice, du type alumineux, en particulier de l'alumine, la craie, l'argile, la bentonite, le talc, le kaolin, les microbilles de verre, les paillettes de verre et leurs mélanges, de manière préférée parmi la silice, la craie, l'argile, la bentonite, le talc, le kaolin et leurs mélanges, préférentiellement parmi la silice, la craie, le kaolin et leurs mélanges.

4. Module de communication radiofréquence selon la revendication précédente dans lequel la charge inorganique est de la silice.

5. Module de communication radiofréquence selon l'une quelconque des revendications précédentes dans lequel le matériau élastomérique comprend un système de vulcanisation comprenant du soufre et un accélérateur de vulcanisation.

6. Module de communication radiofréquence selon l'une quelconque des revendications précédentes dans lequel le matériau élastomérique comprend de 0 à 5 pce d'un promoteur d'adhésion, préférentiellement de sel de cobalt.

7. Module de communication radiofréquence selon l'une quelconque des revendications précédentes dans lequel le matériau élastomérique est un isolant électrique, de préférence avec une constante diélectrique mesurée entre 800 MHz et 1 Ghz inférieure à 6,5.

8. Module de communication radiofréquence selon l'une quelconque des revendications précédentes dans lequel le dispositif électronique est un transpondeur radiofréquence.

9. Module de communication radiofréquence selon la revendication précédente dans lequel la fréquence de communication du transpondeur radiofréquence est située dans la bande des UHF comprise entre 300 MHz et 3 GHz, préférentiellement dans la bande étroite de fréquences comprise entre 860 MHz et 960 Mhz, et très préférentiellement sur des bandes très étroites de 860 MHz à 870 MHz et 915 MHz à 925 MHz.

10. Pneumatique comprenant un module de communication radiofréquence selon l'une quelconque des revendications précédentes.

11. Pneumatique selon la revendication précédente comprenant une nappe métallique comprenant des renforts métalliques substantiellement parallèles entre eux, noyés dans une composition de caoutchouc, dans lequel le module de communication radiofréquence comprend une antenne rayonnante, l'angle entre l'axe de l'antenne rayonnante et l'axe des renforts métalliques étant compris entre 70° et 130°.

## Patentansprüche

1. Hochfrequenz-Kommunikationsmodul (2) mit einer elektronischen Vorrichtung (1), die in einem elastomeren Material (3a, 3b) eingebettet ist, wobei das elastomere Material Folgendes aufweist:
- 40 bis 55 phr eines Butadien-Elastomers, ausgewählt aus Polybutadienen, und 45 bis 60 phr eines Isopren-Elastomers, ausgewählt aus Naturkautschuk und synthetischen Polyisoprenen, und kein weiteres Elastomer;
- 6 bis 20 phr Ruß mit einer spezifischen BET Oberfläche von 70 bis 99 m²/g;
- 25 bis 35 phr anorganischen Füllstoff.

2. Hochfrequenz-Kommunikationsmodul nach dem vorhergehenden Anspruch, das 8 bis 15 phr Ruß mit einer spezifischen BET-Oberfläche im Bereich von 70 bis 99 m²/g aufweist.

3. Hochfrequenz-Kommunikationsmodul nach einem der vorhergehenden Ansprüche, wobei der anorganische Füllstoff aus der Gruppe ausgewählt ist, die aus kieselsäurehaltigen mineralischen Füllstoffen besteht, insbesondere aus Siliziumdioxid, aus aluminiumhaltigen mineralischen Füllstoffen, insbesondere aus Aluminiumoxid, Kreide, Ton, Bentonit, Talkum, Kaolin, Glasmikrokugeln, Glasflocken und deren Mischungen, bevorzugt aus Siliziumdioxid, Kreide, Ton, Bentonit, Talkum, Kaolin und deren Mischungen, bevorzugt aus Siliziumdioxid, Kreide, Kaolin und deren Mischungen.

4. Hochfrequenz-Kommunikationsmodul nach dem vorhergehenden Anspruch, wobei der anorganische Füllstoff Siliziumdioxid ist.

5. Hochfrequenz-Kommunikationsmodul nach einem der vorangehenden Ansprüche, wobei das elastomere Material ein Vulkanisationssystem aufweist, das Schwefel und einen Vulkanisationsbeschleuniger enthält.

6. Hochfrequenz-Kommunikationsmodul nach einem der vorhergehenden Ansprüche, wobei das elastomere Material 0 bis 5 phr eines Haftvermittlers, vorzugsweise Kobaltsalz, aufweist.

7. Hochfrequenz-Kommunikationsmodul nach einem der vorhergehenden Ansprüche, wobei das elastomere Material ein elektrischer Isolator ist, vorzugsweise mit einer bei 800 MHz und 1 Ghz gemessenen Dielektrizitätskonstante, die kleiner als 6,5 ist.

8. Hochfrequenz-Kommunikationsmodul nach einem der vorhergehenden Ansprüche, wobei die elektronische Vorrichtung ein Hochfrequenz-Transponder ist.

9. Hochfrequenz-Kommunikationsmodul nach dem vorhergehenden Anspruch, wobei die Kommunikationsfrequenz des Hochfrequenz-Transponders im UHF-Band zwischen 300 MHz und 3 GHz liegt, vorzugsweise in dem schmalen Frequenzband zwischen 860 MHz und 960 MHz und besonders bevorzugt in den sehr schmalen Frequenzbändern von 860 MHz bis 870 MHz und von 915 MHz bis 925 MHz.

10. Reifen mit einem Hochfrequenz-Kommunikationsmodul nach einem der vorhergehenden Ansprüche.

11. Reifen nach dem vorhergehenden Anspruch, der eine Metalllage mit im Wesentlichen zueinander parallelen Metallverstärkungen aufweist, die in eine Kautschukzusammensetzung eingebettet sind, wobei das Hochfrequenz-Kommunikationsmodul eine Strahlungsantenne aufweist, wobei der Winkel zwischen der Achse der Strahlungsantenne und der Achse der Metallverstärkungen zwischen 70° und 130° liegt.

## Claims

1. Radiofrequency communication module (2) comprising an electronic device (1) coated in elastomeric material (3a, 3b), the elastomeric material comprising:
- from 40 to 55 phr of a butadiene elastomer selected from the polybutadienes, and from 45 to 60 pce of an isoprene elastomer, selected from natural rubber and synthetic polyisoprenes, and does not comprise other elastomers ;
- from 6 to 20 phr of carbon black exhibiting a BET specific surface ranging from 70 to 99 m²/g;
- from 25 to 35 phr of inorganic filler.

2. Radiofrequency communication module according to the preceding claim, comprising from 8 to 15 phr of carbon black exhibiting a BET specific surface ranging from 70 to 99 m²/g.

3. Radiofrequency communication module according to any one of the preceding claims, in which the inorganic filler is selected from the group consisting of inorganic fillers of the siliceous type, in particular silica, of the aluminous type, in particular alumina, chalk, clay, bentonite, talc, kaolin, glass microbeads, glass flakes and their mixtures, preferably from silica, chalk, clay, bentonite, talc, kaolin and their mixtures, preferentially from silica, chalk, kaolin and their mixtures.

4. Radiofrequency communication module according to the preceding claim, in which the inorganic filler is silica.

5. Radiofrequency communication module according to any one of the preceding claims, in which the elastomeric material comprises a vulcanization system comprising sulfur and a vulcanization accelerator.

6. Radiofrequency communication module according to any one of the preceding claims, comprising from 0 to 5 phr of an adhesion promoter, preferentially cobalt salt.

7. Radiofrequency communication module according to any one of the preceding claims, in which the elastomeric material is an electrical insulator, preferably with a dielectric constant, measured between 800 MHz and 1 GHz, of less than 6.5.

8. Radiofrequency communication module according to any one of the preceding claims, in which the electronic device is a radiofrequency transponder.

9. Radiofrequency communication module according to the preceding claim, in which the communication frequency of the radiofrequency transponder lies in the UHF band of between 300 MHz and 3 GHz, preferentially in the narrow frequency band of between 860 MHz and 960 MHz and very preferentially over very narrow bands from 860 MHz to 870 MHz and 915 MHz to 925 MHz.

10. Tyre comprising a radiofrequency communication module according to any one of the preceding claims.

11. Tyre according to the preceding claim, comprising a metal ply comprising metal reinforcements which are substantially parallel to one another and which are embedded in a rubber composition, in which tyre the radiofrequency communication module comprises a radiating antenna, the angle between the axis of the radiating antenna and the axis of the metal reinforcements being between 70° and 130°.
